# EUROPEAN PATENT APPLICATION

(11) **EP 4 723 244 A1**
(43) Date of publication of application: **08.04.2026**
(21) Application number: 24927599.1
(22) Date of filing: 09.09.2024
(51) Int. Cl.: H01M 4/62

(54) **POSITIVE ELECTRODE SHEET AND SECONDARY BATTERY**

(30) Priority: 13.08.2024 CN 202411111663
(71) Applicant: ZHEJIANG LIWINON ENERGY TECHNOLOGY CO., LTD., Jinhua, Zhejiang 321113 (CN)
(72) Inventor: The designation of the inventor has not yet been filed
(74) Representative: Zoli, Filippo
(86) International application number: PCT/CN2024/117815
(87) International publication number: WO 2026/036463

(57) **Abstract**

The present disclosure relates to a positive electrode sheet and a secondary battery. The positive electrode sheet includes: a current collector; a multifunctional coating disposed on at least one side of the current collector; and a positive electrode active material layer disposed on a surface of the multifunctional coating at the side away from the current collector. The components of the multifunctional coating include a solid electrolyte, a first conductive agent, and a first binder. The resistance of the multifunctional coating, the resistance of the positive electrode sheet, and the thickness satisfy a relational formula: 2 ≤ R₁*R₂*d ≤ 45, where R₁ is the resistance of the multifunctional coating, R₂ is the resistance of the positive electrode sheet, and d is the total thickness of the multifunctional coating.

## Description

### TECHNICAL FIELD

The present disclosure relates to the technical field of secondary batteries, and in particular to a positive electrode sheet and a secondary battery.

### BACKGROUND

Lithium-ion batteries have the advantages of high energy density, no memory effect, a long cycle life, and environmental friendliness, etc., and are adaptable to various environments, and thus they are widely applied in products such as 3C, electric vehicles, and electric tools, etc.

With the increasingly fierce competition in the lithium battery industry, customers have increasingly higher demands for the safety of lithium batteries. Therefore, applying a safety coating on the positive electrode current collector is one of the commonly used measures to improve the safety of batteries. Generally speaking, safety coatings contain a certain proportion of inorganic fillers, conductive agents, and binders. The inorganic filler can either be inert substances such as alumina and boehmite, or active materials such as lithium iron phosphate and lithium iron manganese phosphate, etc., that can provide a certain capacity and meanwhile have good thermal stability.

The use of safety coatings can greatly improve the safety of batteries. However, the introduction of safety coatings can also significantly increase the internal resistance of the battery cells, leading to deterioration of their low-temperature discharge performance and cycle performance.

### SUMMARY

A main objective of the present disclosure is to provide a positive electrode sheet and a secondary battery, aiming at solving the problem of deterioration of the low-temperature discharge performance and cycle performance of the battery cells caused by the safety coating of the existing lithium batteries.

In order to achieve the above objective, the present disclosure provides a positive electrode sheet. The positive electrode sheet includes:
a current collector;
a multifunctional coating disposed on a surface of at least one side of the current collector; and
a positive electrode active material layer disposed on a surface of the multifunctional coating;
where the components of the multifunctional coating include a solid electrolyte, a first conductive agent, and a first binder; the resistance and the total thickness of the multifunctional coating, and the resistance of the positive electrode sheet satisfy a relational formula: 2 ≤ R₁*R₂*d ≤ 45, where R₁ is the resistance of the multifunctional coating, R₂ is the resistance of the positive electrode sheet, and d is the total thickness of the multifunctional coating; and
the mass ratio c of the solid electrolyte to the multifunctional coating and the ionic conductivity 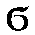 of the solid electrolyte at room temperature satisfy a relational formula: 0.1 ≤ (10c³ - 21c² + 14c + 0.08)/(lg 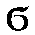 )² ≤ 0.45.

In some embodiments, the resistance and the total thickness of the multifunctional coating, and the resistance of the positive electrode sheet satisfy a relational formula: 15 ≤ R₁*R₂*d ≤ 35.

In some embodiments, the mass ratio c of the solid electrolyte to the multifunctional coating and the ionic conductivity 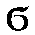 of the solid electrolyte at room temperature satisfy a relational formula: 0.12 ≤ (10c³ - 21c² + 14c + 0.08)/(lg 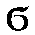 )² ≤ 0.22.

In some embodiments, the total thickness d of the multifunctional coating is 1 µm to 20 µm; and more preferably, the total thickness d of the multifunctional coating is 7.5 µm to 10.3 µm;
and/or, under a test pressure of 0.4 tons, the resistance R₁ of the multifunctional coating is 0.5 Ω to 5 Ω, and more preferably 1.2 Ω to 1.9 Ω.

In some embodiments, a mass ratio of the solid electrolyte, the first conductive agent, and the first binder in the multifunctional coating is (1 to 95): (0.5 to 5): (0.5 to 10);
and/or, the total thickness d of the multifunctional coating is 7.5 µm to 10.3 µm.

In some embodiments, the first conductive agent is selected from one or two of conductive carbon black and carbon nanotubes; and/or, the first binder is selected from at least one of polyvinylidene fluoride, styrene butadiene rubber, sodium carboxymethyl cellulose, and polyacrylate.

In some embodiments, the multifunctional coating further comprises at least one of a thermally stable active material and an inert inorganic filler;
and/or, a mass ratio of the solid electrolyte, the first conductive agent, the first binder, the thermally stable active material, and the inert inorganic filler in the multifunctional coating is (1 to 95): (0.5 to 5): (0.5 to 10): (1 to 95): (1 to 95).

In some embodiments, the thermally stable active material is selected from one or two of lithium iron phosphate and lithium iron manganese phosphate, and the inert inorganic filler is selected from one or two of alumina and boehmite;
and/or, the double-sided coating surface density of the multifunctional coating is 2 mg/1540.25 mm² to 35 mg/1540.25 mm².

In some embodiments, the solid electrolyte is selected from at least one of Li₁₊ₓAlₓM₂₋ₓ(PO₄)₃, Li₇La₃N₂O₁₂, Li_{3y}La_{2/3-y}TiO₃, Li_{7-z}La₃Zr_{2-z}Ta_{z}O₁₂ and Li_{2+a-b}ZrCl_{6-a-b}Oₐ, where 0 < x < 0.5, M is selected from Ti and/or Ge; N is selected from at least one of Zr, Sn, and Ta; 0 < y < 0.16, 0 < z < 2, 0 ≤ a ≤ 2, and 0 ≤ b ≤ 0.75;
and/or, the particle size Dᵥ₅₀ of the solid electrolyte is 0.2 µm to 1.5 µm.

The present disclosure further provides a secondary battery including a positive electrode sheet, a negative electrode sheet and a separator interposed between the positive electrode sheet and the negative electrode sheet, where the positive electrode sheet is the positive electrode sheet as described above.

The beneficial effect of the technical scheme of the present disclosure lies in that: by providing the multifunctional coating between the current collector and the active material layer of the positive electrode sheet, containing the solid electrolyte in the multifunctional coating and regulating 2 ≤ R₁*R₂*d ≤ 45 and 0.1 ≤ (10c³ - 21c² + 14c + 0.08)/(lg 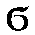 )² ≤ 0.45, the present disclosure can effectively improve the low-temperature discharge performance and cycle performance of the battery, thereby balancing the safety performance of the battery cells.

### BRIEF DESCRIPTION OF DRAWINGS

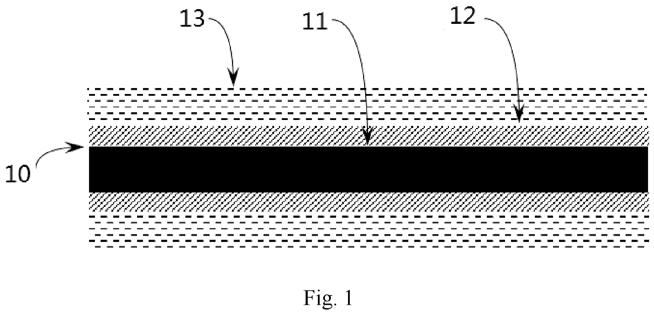

FIG. 1 is a structural schematic diagram of a positive electrode sheet according to an embodiment of the present disclosure.

### DETAILED DESCRIPTION

The technical schemes in the embodiments of the present disclosure will be clearly and completely described below with reference to the accompanying drawings in the embodiments of the present disclosure. Obviously, the described embodiments are only a part of the embodiments of the present disclosure, rather than all the embodiments. Based on the embodiments in the present disclosure, all other embodiments obtained by those having ordinary skills in the art without making creative efforts shall fall within the protection scope of the present disclosure.

It should be noted that all directional indicators, such as up, down, left, right, front, rear, top, bottom, side, etc., in the embodiments of the present disclosure are only used to illustrate the relative positional relationship, movements, etc., between various components under a specific posture (as shown in the accompanying drawings). If the specific posture changes, the directional indicators will also change accordingly.

It should also be noted that when an element is referred to as being "fixed on" or "disposed on" another element, it may be directly on the other element or there may be an intermediate element. When an element is referred to as being "connected" to another element, it may be directly connected to the other element or there may be an intermediate element.

In addition, the descriptions involving "first," "second", and the like in the embodiments of the present disclosure are only for descriptive purposes, and shall not be construed as indicating or implying their relative importance or implicitly indicating the number of the indicated technical features.

The internal short circuit of lithium-ion batteries generally can be divided into several types: 1) a short circuit between positive electrode and negative electrode current collectors; 2) a short circuit between positive electrode and negative electrode active materials; 3) a short circuit between the negative electrode active material and the positive electrode current collector; and 4) a short circuit between the positive electrode active material and the negative electrode current collector. The impedance of a short circuit point between the negative electrode active material and the positive electrode current collector is small, and the triggering temperature of the negative electrode exothermic reaction is low. Therefore, the short circuit between the negative electrode active material and the positive electrode current collector is the most dangerous. By introducing a safety coating onto a surface of the positive electrode current collector to reduce the probability of contact between the positive electrode current collector and the negative electrode active material, the safety performance of the battery cell can be effectively improved. However, in the existing technology, the introduction of safety coatings can also significantly increase the internal resistance of the battery cells, leading to deterioration of their low-temperature discharge performance and cycle performance.

In view of the deficiencies present in the existing technology, an embodiment of the present disclosure provides a positive electrode sheet. Referring to FIG. 1, the positive electrode sheet 10 includes:
a current collector 11;
a multifunctional coating 12 disposed on a surface of at least one side of the current collector 11; and
a positive electrode active material layer 13 disposed on a surface of the multifunctional coating 12 at the side away from the current collector 11;
where the components of the multifunctional coating 12 include a solid electrolyte, a first conductive agent, and a first binder, the resistance and the total thickness of the multifunctional coating, and the resistance of the positive electrode sheet satisfy a relational formula: 2 ≤ R₁*R₂*d ≤ 45, where R₁ is the resistance of the multifunctional coating 12, R₂ is the resistance of the positive electrode sheet 10, and d is the total thickness of the multifunctional coating 12;
the mass ratio c of the solid electrolyte to the multifunctional coating and the ionic conductivity 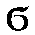 of the solid electrolyte at room temperature satisfy a relational formula: 0.1 ≤ (10c³ - 21c² + 14c + 0.08)/(lg 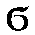 )² ≤ 0.45.

In this embodiment, by providing the multifunctional coating between the current collector of the positive electrode sheet and the positive electrode active material layer, containing the solid electrolyte in the multifunctional coating and utilizing its characteristic of good ionic conductivity at a low temperature, the low-temperature discharge performance and cycle performance of the battery can be improved. Generally speaking, the effect of solid electrolyte is related to its content and ionic conductivity. If its content or ionic conductivity is too low, it cannot achieve a good effect. However, when (10c³ - 21c² + 14c + 0.08)/(lg 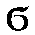 )² ≥ 0.1, it can ensure that the solid electrolyte performs well. In addition, the three parameters R₁, d and R₂ are positively correlated with the safety of the battery cell, while negatively correlated with the cycle performance of the battery cell. When R₁*R₂*d < 2, the safety performance of the battery cell is poor, and when R₁*R₂*d > 45, the cycle performance of the battery cell is poor. The present disclosure has made the above limitations on the parameters of the multifunctional coatings, which can balance the safety and cycle performances of the battery cells without changing the original process, achieving a good balance between the safety and cycle performances.

Further, the room temperature in this embodiment is 25°C. Generally speaking, the larger the c and 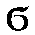 , the better the low-temperature discharge performance of the battery cell is, and the larger the 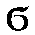 , the smaller the c is when achieving the same effect. In this embodiment, considering the marginal decreasing effect of the usage effect of the solid electrolyte and its expensive price, when the above relation is satisfied, using a small amount of the solid electrolyte can greatly improve the low-temperature discharge performance of the battery cell. When the parameters in the multifunctional coating simultaneously satisfy the above two relational formulas, it can be achieved that the nail penetration passing rate of the battery cell is greater than 90%, the 3.4 V discharge capacity at -10°C is not less than 79%. Meanwhile, the capacity retention rate after 800 cycles at 25°C is not less than 89%.

Preferably, the resistance and the total thickness of the multifunctional coating, and the resistance of the positive electrode sheet satisfy a relational formula: 15 ≤ R₁*R₂*d ≤ 35. Within this range, the performance of the sample is more excellent, the passing rate of the nail penetration test can reach 100%, and the capacity retention rate after 800 cycles at room temperature is > 90%.

Preferably, the mass ratio c of the solid electrolyte to the multifunctional coating and the ionic conductivity 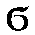 of the solid electrolyte at room temperature satisfy a relational formula: 0.12 ≤ (10c³ - 21c² + 14c + 0.08)/(lg 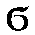 )² ≤ 0.22. Within this range, the usage amount of the solid electrolyte is relatively small and the improvement in low-temperature discharge performance is significant, resulting in better comprehensive incomes.

The selection of raw materials will affect the resistance R₁ and total thickness d of the multifunctional coating, as well as the resistance R₂ of the positive electrode sheet, which in turn affects whether the parameters of the multifunctional coating can meet the above relational formula. Therefore, the present disclosure also needs to further limit the raw materials and usage amount of the multifunctional coating.

On this basis, in some embodiments, the total thickness d of the multifunctional coating is 1 µm to 20 µm; and/or, under a test pressure of 0.4 tons, the resistance R₁ of the multifunctional coating is 0.5 Ω to 5 Ω.

In this embodiment, the separator resistance of the multifunctional coating is the primary factor affecting the safety performance of the battery cell. If the value is too small, it will deteriorate the safety performance of the battery cell. If the value is too large, it will deteriorate the cycle performance of the battery cell. The value is between 0.5 Ω to 5 Ω (at the test pressure of 0.4 tons), preferably 1.2 Ω to 1.9 Ω, which can balance the safety performance and the cycle performance.

In some embodiments, the mass ratio of the solid electrolyte, the first conductive agent, and the first binder in the multifunctional coating is (1 to 95): (0.5 to 5): (0.5 to 10); and/or, the total thickness d of the multifunctional coating is 7.5 µm to 10.3 µm.

In this embodiment, the usage amount of the first conductive agent is 0.5% to 5%, preferably 2% to 3.5% of the weight of the multifunctional coating. If the content of the conductive agent is too low, it will cause a relatively high separator resistance of the multifunctional coating, resulting in poor cycle performance of the battery cell. If the content of the conductive agent is too high, it will cause a relatively low separator resistance of the multifunctional coating, resulting in poor safety of the battery cell. When the content of the conductive agent is between 0.5% to 5%, it can balance the safety performance and the cycle performance. The usage amount of the first binder is 0.5% to 10%, preferably 4% to 6% of the weight of the multifunctional coating. If the usage amount of the first binder is too low, it will result in relatively low binding force and thus a risk of detachment of the coating during use. However, if the usage amount of the first binder is too high, it can increase the binding force and improve the safety performance of the battery cell, but it can also lead to poor cycle performance of the battery cell.

In some embodiments, the first conductive agent is selected from one or two of conductive carbon black and carbon nanotubes; and the first binder is selected from at least one of polyvinylidene fluoride (PVDF), styrene butadiene rubber (SBR), sodium carboxymethyl cellulose (CMC), and polyacrylate (PAA).

In some embodiments, the multifunctional coating further includes at least one of a thermally stable active material and an inert inorganic filler; and/or, the mass ratio of the solid electrolyte, the first conductive agent, the first binder, the thermally stable active material, and the inert inorganic filler in the multifunctional coating is (1-95): (0.5-5): (0.5-10): (1-95): (1-95).

In this embodiment, although the thermally stable active material and the inert inorganic filler are both non-essential components, considering the cost and processability, a certain amount of the thermally stable active material and the inert inorganic filler can be added into the multifunctional coating.

In some embodiments, the thermally stable active material is selected from one or two of lithium iron phosphate and lithium iron manganese phosphate; and the inert inorganic filler is selected from one or two of alumina and boehmite.

In some embodiments, the double-sided coating surface density of the multifunctional coating is 2 mg/1540.25 mm² to 35 mg/1540.25 mm².

In this embodiment, there is a positive correlation relationship between the double-sided coating surface density of the multifunctional coating and its thickness. If this thickness is too low, the safety performance of the battery cell will be poor. If this thickness is too large, it will reduce the energy density of the battery cell.

In some embodiments, the solid electrolyte is selected from at least one of Li₁₊ₓAlₓM₂₋ₓ(PO₄)₃, Li₇La₃N₂O₁₂, Li_{3y}La_{2/3-y}TiO₃, Li_{7-z}La₃Zr_{2-z}Ta_{z}O₁₂ and Li_{2+a-b}ZrCl_{6-a-b}Oₐ, where 0 < x < 0.5, M is selected from Ti and/or Ge; and N is selected from at least one of Zr, Sn, and Ta; 0 < y < 0.16, 0 < z < 2, 0 ≤ a ≤ 2, 0 ≤ b ≤ 0.75; and/or, the particle size Dᵥ₅₀ of the solid electrolyte is 0.2 µm to 1.5 µm.

In this embodiment, the ionic conductivity of the selected solid electrolyte at room temperature is greater than 10⁻⁵ S/cm, and preferably, the solid electrolyte can be one or more of Li₁₊ₓAlₓTi₂₋ₓ(PO₄)₃ (lithium aluminum titanium phosphate, LATP), Li₇La₃Zr₂O₁₂ (lithium lanthanum zirconium oxide, LLZO), Li₃ₓLa_{2/3-x}TiO₃ (lithium lanthanum titanium oxide, where 0 < x < 0.16, LLTO) and Li_{2+a-b}ZrCl_{6-a-b}Oₐ (lithium zirconium oxychloride, LZCO, 0 ≤ a ≤ 2, 0 ≤ b ≤ 0.75). The particle size Dᵥ₅₀ of the solid electrolyte is between 0.2 µm to 1.5 µm. If the particles are too small, it is not conducive to the subsequent processing and dispersion. If the particles are too large, it may cause a longer ion conduction path inside the electrolyte, thereby reducing the ion conduction efficiency. Moreover, larger particles may not be able to form good contact with the electrode material, resulting in increased interface impedance and affecting the charge and discharge performance of the battery. At the same time, larger particles may cause larger stress in the battery cell during the cycle process, accelerating the aging of the material and reducing the cycle life of batteries.

In some embodiments, a method for preparing the multifunctional coating includes:
mixing the raw materials of the multifunctional coating with a solvent to obtain a slurry of the multifunctional coating; and
transferring the slurry of the multifunctional coating to a surface on at least one side of the current collector through a gravure printing manner to obtain the multifunctional coating.

In this embodiment, N-methylpyrrolidone (NMP) can be selected as the solvent. Due to the strict requirements for the resistance and thickness, etc., of the multifunctional coating in the present disclosure, a precise control to the parameters of the multifunctional coating can be achieved by using the gravure printing manner, where during gravure printing, the temperature of the oven is 90°C to 110°C, and the printing speed is 10 m/min to 50 m/min. When the temperature of the oven is below 90°C, it will reduce the production efficiency. When the temperature of the oven is above 110°C, there may be problems such as cracking by baking and conductive agent migration to the surface, etc. If the printing speed is too low, it will also reduce the production efficiency. If the printing speed is too high, it will lead to the problem of holiday of the multi-functional coating, thereby resulting in a negative impact on the safety performance of the battery cell.

In some embodiments, the slurry of the multifunctional coating has a solid content no less than 10%, and a viscosity no less than 50 mPa·s. Too low solid content will not only reduce the production efficiency, but also make it difficult to obtain a multifunctional coating with specified thickness and face density. Too low viscosity is not conducive to the gravure printing process. The multifunctional coating can firmly adhere to the surface of the current collector, which can not only reduce the surface contact resistance, but also reduce the generation of burrs of the positive electrode current collector during safety testing of the battery cell, reduce the contact short circuit between the burrs of the positive electrode current collector and the unstable negative electrode active material in the charging state, thereby improving the safety of the battery cell. Meanwhile, the solid electrolyte contained in the multifunctional coating can also conduct ions, thereby reducing the interface impedance, and maintaining good low-temperature discharge performance and cycle performance of the battery cell.

In this embodiment, the binding force between the multifunctional coating 12 and the current collector 11 is not less than 100 N/m. When the binding force is less than 100 N/m, there is a risk of detachment of the multifunctional coating during the subsequent use. The current collector 11 can be one or two of an aluminum foil and a composite aluminum foil; and the active material layer 13 includes a positive electrode active material, a second conductive agent, and a second binder.

In some embodiments, the positive electrode active material may be one or more of common lithium cobalt oxide, lithium iron phosphate, and ternary materials, with a usage amount of 90% to 98% of the total weight of the positive electrode active material layer 13. Under the condition of ensuring that the positive electrode active material layer has a certain electrical conductivity and binding force, the higher the content of the positive electrode active material, the better, thereby enabling the battery cell to have a higher energy density; the second conductive agent is a commonly used conductive agent, including one or two of conductive carbon black and carbon nanotubes, the usage amount of the second conductive agent is 0.5% to 5%, preferably 0.5% to 2% of the total weight of the positive electrode active material layer 13. If the content of the second conductive agent is too low, it will cause higher resistance R₂ of the positive electrode sheet, resulting in poor cycle performance of the battery cell. If the content of the second conductive agent is too high, it will be beneficial for improving the cycle performance, but it will lead to poor safety performance of the battery cell. The second binder can be one or more of polyvinylidene fluoride (PVDF), sodium carboxymethyl cellulose (CMC), and polyacrylate (PAA), with a usage amount thereof of 0.5% to 5% of the total weight of the positive electrode active material layer 13. The effect of the usage amount of the second binder is similar to that of the first binder. However, considering that it does not directly contact the current collector, the upper limit of its usage amount can be appropriately reduced to ensure that no detachment of the positive electrode active material will occur during the use of the battery cell. At the same time, a lower usage amount can also improve the cycle performance of the battery cell, increase the usage amount of the positive electrode active material, and improve the energy density of the battery cell.

The present disclosure further provides a secondary battery including a positive electrode sheet, a negative electrode sheet, and a separator interposed between the positive electrode sheet and the negative electrode sheet, where the positive electrode sheet is the positive electrode sheet as described above.

In this embodiment, the positive electrode sheet includes a positive electrode current collector containing a multifunctional coating and a positive electrode active material layer applied on at least one surface of the positive electrode current collector as described above. The positive electrode active material layer includes a positive electrode active material, which is a commonly used positive electrode active material in the current lithium-ion batteries, including but not limited to a combination of one or more of compounds of chemical formula such as LiₓNiₕCo_{y}M_{z}O_{2-d}N_{d} (where 0.95 ≤ x ≤ 1.2, h > 0, y ≥ 0, z ≥ 0, and h + y + z = 1, 0 ≤ d ≤ 1, M is selected from a combination of one or more of Mn and Al; and N is selected from a combination of one or more of F, P, and S), and the positive electrode active material may also be, including but not limited to, a combination of one or more of LiCoO₂, LiNiO₂, LiVO₂, LiCrO₂, LiMn₂O₄, LiCoMnO₄, Li₂NiMn₃O₈, LiNi_{0.5}Mn_{1.5}O₄, LiCoPO₄, LiMnPO₄, LiFePO₄, LiNiPO₄, LiCoFSO₄, CuS₂, FeS₂, MoS₂, NiS, TiS₂, etc. The positive electrode active material can also undergo modification treatment, and the modification treatment method for the positive electrode active material should be known to those skilled in the art. For example, coating, doping and the like methods, can be employed to modify the positive electrode active material, and the materials used for the modification treatment can include but are not limited to a combination of one or more of Al, B, P, Zr, Si, Ti, Ge, Sn, Mg, Ce, and W, etc.

The negative electrode sheet includes a negative electrode current collector and a negative electrode active material layer coated on at least one surface of the negative electrode current collector, where the negative electrode current collector is a copper foil. The negative electrode active material layer includes a negative electrode active material, which includes a silicon-based material that can be selected from one or more of elemental silicon, silicon oxide compounds, silicon carbon composites, and silicon alloys, or a mixture of the silicon negative electrode material with other currently commonly used negative electrode active materials. The other negative electrode active materials include but are not limited to one or more of graphite, soft carbon, hard carbon, carbon fibers, mesocarbon microbeads, tin-based materials, lithium titanate, or other metals that can form alloys with lithium, etc. The graphite can be selected from one or more of artificial graphite, natural graphite, and modified graphite. The tin-based material can be selected from one or more of elemental tin, tin oxide compounds, and tin alloys.

The separator can be various materials suitable for the separator of lithium-ion batteries in the art, for example it can be but not limited to a combination of one or more of polyethylene, polypropylene, polyvinylidene fluoride, aramid, polyethylene terephthalate, polytetrafluoroethylene, polyacrylonitrile, polyimide, polyamide, polyester, and natural fibers, etc.

The secondary battery also includes an electrolyte solution, which includes organic solvents, electrolyte lithium salts, and additives. The electrolyte lithium salt can be LiPF₆ and/or LiBOB employed in a high-temperature electrolyte solution; it can also be at least one of LiBF₄, LiBOB, and LiPF₆ used in a low-temperature electrolyte solution; it can also be at least one of LiBF₄, LiBOB, LiPF₆, and LiTFSI used in an anti-overcharge electrolyte solution; or it can be at least one of LiClO₄, LiAsF₆, LiCF₃SO₃ and LiN(CF₃SO₂)₂. The organic solvent can be cyclic carbonates, including propylene carbonate (PC) and ethylene carbonate (EC); it can also be chain carbonates, including diethyl carbonate (DEC), dimethyl carbonate (DMC), or methyl ethyl carbonate (EMC); and it can also be carboxylates, including propyl propionate (PP), methyl acetate (MA), ethyl acetate (EA), ethyl propanoate (EP), etc. The additive includes but is not limited to at least one of film-forming additives, conductive additives, flame retardant additives, anti-overcharge additives, additives that control the H₂O and HF contents in the electrolyte solution, additives that improve the low-temperature performance, and multifunctional additives.

In order to make the technical scheme and advantages of the present disclosure clearer, the present disclosure and its beneficial effects will be further described in detail in conjunction with specific embodiments. However, the embodiments of the present disclosure are not limited thereto.

### Example 1

A positive electrode sheet including a positive electrode active material layer, a multifunctional coating, and an aluminum foil, was provided. The multifunctional coating could firmly adhere to the surface of the aluminum foil, which could not only reduce the surface contact resistance, but also reduce the generation of burrs of the positive electrode current collector during safety testing of the battery cell, reduce the contact short circuit between the burrs of the positive electrode current collect the unstable negative electrode active material in the charging state, thereby improving the safety of the battery cell. Meanwhile, the solid electrolyte contained in the multifunctional coating could also conduct ions, thereby reducing the interface impedance, and maintaining good low-temperature discharge performance and cycle performance of the battery cell.

The multifunctional coating was disposed on two surfaces of the aluminum foil. The double-sided separator resistance R₂ (Ω) of the positive electrode sheet, the double-sided separator resistance R₁ (Ω) of the multifunctional coating of the positive electrode sheet and the total thickness d thereof (µm) shall meet 2 ≤ R₁*R₂*d ≤ 45. Furthermore, the mass content ratio c of the solid electrolyte to the multifunctional coating and the ionic conductivity 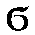 of the solid electrolyte at room temperature satisfied 0.1 ≤ (10c³ - 21c² + 14c + 0.08)/(lg 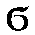 )² ≤ 0.45. In addition to the solid electrolyte, the multifunctional coating included a certain proportion of conductive carbon black SuperPLi as a first conductive agent, PVDF as a first binder, and boehmite. Specifically, the preparation method thereof was as follows:
NMP (N-methylpyrrolidone) was used as the solvent in parts by weight, 76 parts of boehmite, 15 parts of Li_{1.4}Al_{0.4}Ti_{1.6}(PO₄)₃ (lithium aluminum titanium phosphate, LATP, ionic conductivity of 1.83 × 10⁻⁴ S/cm, Dᵥ₅₀ of 0.5 µm) as the solid electrolyte, 6 parts of PVDF as the first binder, and 3 parts of SuperPLi as the first conductive agent were mixed evenly to obtain a slurry of the multifunctional coating with a solid content of 20% and a viscosity of 100 mPa·s. The slurry of the multifunctional coating was applied to the surfaces on both sides of the aluminum foil by gravure printing, the temperature of the oven was set at 95°C during printing, and the printing speed was 30 m/min. Finally, the aluminum foil containing the multifunctional coating was obtained with a double-sided coating surface density of 15 mg/1540.25 mm², a total double-sided thickness of 8.1 µm (referring to the sum of the thicknesses of the multifunctional coatings disposed on the two surfaces of the aluminum foil), a double-sided separator resistance of 1.5 Ω (at a test pressure of 0.4 tons), and a bonding force of 215 N/m between the multifunctional coating and the aluminum foil.

The obtained aluminum foil containing the multifunctional coating was applied to the lithium-ion batteries, and a method for preparing the lithium-ion batteries was as follows:
(1) Preparation of positive electrode sheet:
   Lithium cobalt oxide, a conductive agent (a mixture of conductive carbon black and carbon nanotubes with a mass ratio of 6:5), a PVDF binder, and NMP were mixed evenly at a mass ratio of 97.6:1.1:1.3:35 to prepare a positive electrode slurry with a solid content of 75% and a viscosity of 7,000 mPa·s. The positive electrode slurry was applied on the surface of one side of the above aluminum foil containing the multifunctional coating, which was oven dried at 85°C and rolled up, then the positive electrode slurry was applied and dried on the surface of the other side of the aluminum foil according to the above method, and the positive electrode sheet coated with the positive electrode active material layer on both sides was subjected to cold pressing treatment; then to side shearing and slitting to prepare the positive electrode sheet of the lithium-ion battery (with the double-sided separator resistance of 1.7 Ω, and the test pressure of 0.4 t).
(2) Preparation of negative electrode sheet:
   Water was used as the solvent, and graphite, a thickener, and an SBR binder were mixed evenly at a mass ratio of 97.7:1.1:1.2 to prepare a negative electrode slurry of the lithium-ion battery with a solid content of 50% and a viscosity of 5,000 mPa·s, which was applied on the surface of one side of the copper foil and oven dried at 80°C and rolled up, then the negative electrode slurry was applied and dried on the other side of the copper foil according to the above method to obtain a negative electrode sheet coated with the active material on both sides.
(3) Preparation of electrolyte solution:
   Lithium hexafluorophosphate (LiPF₆) was dissolved in a mixed solvent of dimethyl carbonate (DMC), ethylene carbonate (EC), and methyl ethyl carbonate (EMC) (with a mass ratio of DMC, EC, and EMC of 3:5:2) to obtain an electrolyte solution.
(4) Preparation of battery:
   The positive electrode sheet, the negative electrode sheet, and the separator prepared above were wound into a battery cell with a capacity of battery cell of approximately 5 Ah. The separator was located between the adjacent positive electrode sheet and negative electrode sheet, with the positive electrode being led out by spot welding with aluminum tabs and the negative electrode being led out by spot welding with nickel tabs; then the battery cell was placed in an aluminum-plastic sealing bag, baked, then injected with the above electrolyte solution, and subjected to procedures such as sealing, formation, and capacity grading, etc., to finally prepare the lithium-ion battery.

### Example 2

The difference between this example and Example 1 was that the usage amount of the components of the multifunctional coating was different, specifically: the usage amount of LATP was 50 parts, and the usage amount of boehmite was 41 parts.

The rest was the same as Example 1, and would not be repeated here.

### Example 3

The difference between this example and Example 1 was that the components of the multifunctional coating were different, specifically: 15 parts of LATP was replaced with 15 parts of Li₇La₃Zr₂O₁₂ (lithium lanthanum zirconium oxide (LLZO), with an ionic conductivity of 1.87 × 10⁻⁴ S/cm, and Dᵥ₅₀ of 0.5 µm).

The rest was the same as Example 1, and would not be repeated here.

### Example 4

The difference between this example and Example 1 was that the components of the multifunctional coating and their contents were different, specifically: 15 parts of LATP was replaced with 30 parts of Li_{0.33}La_{0.57}TiO₃ (lithium lanthanum titanium oxide (LLTO), with an ionic conductivity of 2.29 × 10⁻⁵ S/cm, and Dᵥ₅₀ of 0.5 µm), and the usage amount of boehmite was 61 parts.

The rest was the same as Example 1, and would not be repeated here.

### Example 5

The difference between this example and Example 1 was that the components of the multifunctional coating and their contents were different, specifically: 15 parts of LATP was replaced with 60 parts of Li_{0.33}La_{0.57}TiO₃ (lithium lanthanum titanium oxide (LLTO), with an ionic conductivity of 2.29 × 10⁻⁵ S/cm, and Dᵥ₅₀ of 0.5 µm), and the usage amount of boehmite was 31 parts.

The rest was the same as Example 1, and would not be repeated here.

### Example 6

The difference between this example and Example 1 was that the components of the multifunctional coating and their contents were different, specifically: 15 parts of LATP was replaced with 80 parts of Li_{0.33}La_{0.57}TiO₃ (lithium lanthanum titanium oxide (LLTO), with an ionic conductivity of 2.29 × 10⁻⁵ S/cm, and Dᵥ₅₀ of 0.5 µm), and the usage amount of boehmite was 11 parts.

The rest was the same as Example 1, and would not be repeated here.

### Example 7

The difference between this example and Example 1 was that the particle size of LATP of the multifunctional coating was different, specifically: the particle size Dᵥ₅₀ of LATP was 1 µm.

The rest was the same as Example 1, and would not be repeated here.

### Example 8

The difference between this example and Example 1 was that the particle size of LATP of the multifunctional coating was different, specifically: the particle size Dᵥ₅₀ of LATP was 1.3 µm.

The rest was the same as Example 1, and would not be repeated here.

### Example 9

The difference between this example and Example 1 was that the usage amount of the components of the multifunctional coating was different, specifically: the usage amount of the first conductive agent SuperPLi was reduced from 3 parts to 2 parts, and the usage amount of boehmite was increased from 76 parts to 77 parts.

The rest was the same as Example 1, and would not be repeated here.

### Example 10

The difference between this example and Example 1 was that the prepared multifunctional coating slurry had a solid content of 23%, and a viscosity of 157 mPa·s, and the temperature of the oven was set to 95°C when the gravure printing was performed, and the printing speed was 25 m/min, and the thickness of the final multifunctional coating obtained was 10.3 µm.

The rest was the same as Example 1, and would not be repeated here.

### Example 11

The difference between this example and Example 1 was that the usage amount of the components of the multifunctional coating was different, specifically: the usage amount of the SuperPLi as the first conductive agent was increased from 3 parts to 4 parts, and the usage amount of boehmite was reduced from 76 parts to 75 parts.

The rest was the same as Example 1, and would not be repeated here.

### Example 12

The difference between this example and Example 1 was that the usage amount of the components of the multifunctional coating was different, specifically: the usage amount of the SuperPLi as the first conductive agent was increased from 3 parts to 4 parts, and the usage amount of boehmite was reduced from 76 parts to 75 parts, the prepared multifunctional coating slurry had a solid content of 12%, and a viscosity of 81 mPa·s, and the thickness of the finally obtained multifunctional coating was 1 µm.

The rest was the same as Example 1, and would not be repeated here.

### Example 13

The difference between this example and Example 1 was that the usage amount of the components of the multifunctional coating was different, specifically: the usage amount of the SuperPLi as the first conductive agent was increased from 3 parts to 5 parts, and the usage amount of boehmite was reduced from 76 parts to 74 parts, the prepared multifunctional coating slurry had a solid content of 38%, and a viscosity of 165 mPa·s. The temperature of the oven was set to 95°C when the gravure printing was performed, and the printing speed was 25 m/min, and the thickness of the finally obtained multifunctional coating was 20 µm.

The rest was the same as Example 1, and would not be repeated here.

### Example 14

The difference between this example and Example 1 was that the usage amount of the components of the multifunctional coating was different, specifically: the usage amount of LATP was 11 parts, and the usage amount of boehmite was 80 parts.

The rest was the same as Example 1, and would not be repeated here.

### Example 15

The difference between this example and Example 1 was that the components of the multifunctional coating and their usage amount were different, specifically: 15 parts of LATP was replaced with 91 parts of Li_{1.75}ZrCl_{4.75}O_{0.5} (lithium zirconium oxychloride (LZCO), with an ionic conductivity of 2.42 × 10⁻³ S/cm, and Dᵥ₅₀ of 0.5 µm), and boehmite was not contained.

The rest was the same as Example 1, and would not be repeated here.

### Comparative Example 1

The current collector used in the preparation of the positive electrode sheet was smooth aluminum foil without the multifunctional coating.

The rest was the same as Example 1, and would not be repeated here.

### Comparative Example 2

The difference between this comparative example and Example 1 was that the usage amount of LATP was 10 parts, and the usage amount of boehmite was 81 parts.

The rest was the same as Example 1, and would not be repeated here.

### Comparative Example 3

The difference between this comparative example and Example 1 was that the usage amount of the SuperPLi as the first conductive agent was reduced from 3 parts to 0.3 parts, and the usage amount of boehmite was increased from 76 parts to 78.7 parts.

The rest was the same as Example 1, and would not be repeated here.

### Comparative Example 4

The difference between this comparative example and Example 1 was that the usage amount of the SuperPLi as the first conductive agent was increased from 3 parts to 6 parts, and the usage amount of boehmite was reduced from 76 parts to 73 parts.

The rest was the same as Example 1, and would not be repeated here.

### Comparative Example 5

The difference between this comparative example and Example 1 was that the usage amount of the PVDF as the first binder was increased from 6 parts to 15 parts, and the usage amount of boehmite was reduced from 76 parts to 67 parts.

The rest was the same as Example 1, and would not be repeated here.

### Comparative Example 6

The difference between this comparative example and Example 1 was that the prepared multifunctional coating slurry had a solid content of 45%, and a viscosity of 191 mPa·s, and the temperature of the oven was set to 95°C when the gravure printing was performed, and the printing speed was 25 m/min, and the thickness of the finally obtained multifunctional coating was 25 µm.

The rest was the same as Example 1, and would not be repeated here.

The parameters of Examples 1-15 and Comparative Examples 1-6 were shown in Table 1.

Separator resistance testing method: the instrument used for separator resistance testing was the ACCFILM separator resistance testing system (Model: TT-ACCF-G2A) from Hangzhou Chuanyuan Technology Co., Ltd. The pressure during testing was 0.4 t and the pressure holding time was 10 s.

**Table 1: Parameters of Examples 1-15 and Comparative Examples 1-6**

| Test Items | R₁ (Ω) | R₂ (Ω) | d | R₁*R₂*d | c | 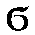 | (10c³ - 21c² + 14c + 0.08)/(lg 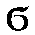 )² |
|---|---|---|---|---|---|---|---|
| Example 1 | 1.5 | 1.7 | 8.1 | 20.66 | 0.15 | 1.83*10⁻⁴ | 0.12 |
| Example 2 | 1.7 | 2 | 7.9 | 26.86 | 0.5 | 1.83*10⁻⁴ | 0.22 |
| Example 3 | 1.6 | 1.7 | 8.2 | 22.30 | 0.15 | 1.87*10⁻⁴ | 0.13 |
| Example 4 | 1.9 | 2.1 | 8.7 | 34.71 | 0.3 | 2.29*10⁻⁵ | 0.12 |
| Example 5 | 1.8 | 2.1 | 7.8 | 29.48 | 0.6 | 2.29*10⁻⁵ | 0.14 |
| Example 6 | 1.9 | 2 | 7.7 | 29.26 | 0.8 | 2.29*10⁻⁵ | 0.14 |
| Example 7 | 1.6 | 1.6 | 8.2 | 20.99 | 0.15 | 1.83*10⁻⁴ | 0.12 |
| Example 8 | 1.5 | 1.8 | 7.9 | 21.33 | 0.15 | 1.83*10⁻⁴ | 0.12 |
| Example 9 | 1.8 | 2.2 | 7.5 | 29.70 | 0.15 | 1.83*10⁻⁴ | 0.12 |
| Example 10 | 1.9 | 2.3 | 10. 3 | 45.01 | 0.15 | 1.83*10⁻⁴ | 0.12 |
| Example 11 | 1.2 | 1.4 | 9 | 15.12 | 0.15 | 1.83*10⁻⁴ | 0.12 |
| Example 12 | 1.4 | 1.45 | 1 | 2.03 | 0.15 | 1.83*10⁻⁴ | 0.12 |
| Example 13 | 1.2 | 1.4 | 20 | 33.60 | 0.15 | 1.83*10⁻⁴ | 0.12 |
| Example 14 | 1.5 | 1.8 | 8.2 | 22.14 | 0.11 | 1.83*10⁻⁴ | 0.10 |
| Example 15 | 1.9 | 2.2 | 8.2 | 34.28 | 0.91 | 2.42*10⁻³ | 0.43 |
| Comparative Example 1 | / | / | / | / | / | / | / |
| Comparative Example 2 | 1.4 | 1.5 | 7.8 | 16.38 | 0.1 | 1.83*10⁻⁴ | 0.09 |
| Comparative Example 3 | 2.8 | 2.7 | 8.1 | 61.24 | 0.15 | 1.83*10⁻⁴ | 0.12 |
| Comparative Example 4 | 0.4 | 0.5 | 7.9 | 1.58 | 0.15 | 1.83*10⁻⁴ | 0.12 |
| Comparative Example 5 | 2.5 | 2.8 | 8.3 | 58.10 | 0.15 | 1.83*10⁻⁴ | 0.12 |
| Comparative Example 6 | 3.2 | 4.5 | 25 | 360.00 | 0.15 | 1.83*10⁻⁴ | 0.12 |

To verify the impact of the introduction of the multifunctional coating described in the present disclosure on the performance of the battery cell, the safety performance (nail penetration test), low-temperature discharge performance, and cycle performance of the battery cell were tested.

Nail penetration testing method: the battery cell was charged to 4.45 V at a constant current of 1.0 C and a constant voltage at room temperature with a cutoff rate of 0.05 C, then the fully charged battery cell was subjected to a nail penetration test. During the test, the pit side of the battery cell was placed upwards, and a steel nail with a diameter of 4.0 mm was used for completely piercing the battery cell at one time at a speed of 40 mm/s, with the nail puncture position located on the left, middle, and right sides of the maximum face of the battery cell (with five battery cells tested at each position), which was held for 1 h. If the battery cell did not catch fire or explode, it was considered to have passed the test.

Low temperature discharge performance testing method: the battery cell was discharged to 3 V at a constant current of 1.0 C and laid aside for 5 min; the thermostat was set to 25°C and laid aside for 60 min; it was charged to 4.45 V at a constant current of 1.0 C and a constant voltage, with a cutoff rate of 0.02 C; laid aside for 5 min, and discharged to 3 V at a constant current of 0.2 C, and the capacity when discharged to 3 V at a constant current of 0.2 C was recorded as the initial capacity C₀; the thermostat was set to 25°C and laid aside for 60 min; it was charged to 4.45 V at a constant current of 1.0 C and a constant voltage, with a cutoff rate of 0.02 C; laid aside for 5 min, the thermostat was set to -10°C, and laid aside for 120 min, and then the battery cell was discharged to 3.0 V at 0.2 C, and the capacities C₁ and C₂ when discharged to 3.4 V and 3.0 V were recorded, and the ratio of C₁ to C₀ was the capacity retention rate when discharged to 3.4 V at -10°C.

Cycle performance testing method: under the condition of an ambient temperature of 25 ± 2°C, the battery cell was discharged to 3.0 V at a constant current of 0.2 C, and then charged to 4.45 V at a constant current of 3 C and a constant voltage with a cut-off rate of 0.05 C, and the voltage, internal resistance, capacity, and thickness of the battery cell when it was fully charged for the first time were recorded (600 g PPG was used for thickness measurement). The cycle process followed the following HFC format: discharge to 3 V at a constant current of 0.2 C; charge to 4.25 V at a constant current of 3.0 C; charge to 4.25 V at a constant current of 2.5 C; charge to 4.45 V at a constant current of 2.0 C; charge to 4.50 V at a constant current of 1.4 C and a constant voltage with a cutoff rate of 0.3 C; charge to 4.45 V at a constant current of 2 A and a constant voltage with a cutoff rate of 0.05 C; and discharge to 3 V at a constant current of 1.0 C. When the above steps were completed, it was regarded as 1 cycle, and after 49 cycles, a low current recovery was performed according to the following format: charge to 4.25 V at a constant current of 3.0 C; charge to 4.25 V at a constant current of 2.5 C; charge to 4.45 V at a constant current of 2.0 C; charge to 4.50 V at a constant current of 1.4 C and a constant voltage with a cutoff rate of 0.3 C; charge to 4.45 V at a constant current of 2 A and a constant voltage with a cutoff rate of 0.05 C; discharge to 3 V at a constant current of 0.2 C; and charge to 4.45 V at a constant current of 3.0 C and a constant voltage with a cutoff rate of 0.05 C. The voltage, internal resistance, and thickness of the battery cell when it was fully charged were recorded every 100 cycles (600 g PPG was used for thickness measurement).

The secondary batteries obtained from Examples 1-15 and Comparative Examples 1-6 were tested, and the test results were shown in Table 2 below.

**Table 2: Test Results of Examples 1-15 and Comparative Examples 1-6**

| Test Items | Nail penetration | Low-temperature performance (3.4 V, @-10°C) | Cycle performance (capacity retention rate @800 cls, RT) |
|---|---|---|---|
| Example 1 | 15/15 | 81.2% | 90.2% |
| Example 2 | 15/15 | 82.6% | 90.5% |
| Example 3 | 15/15 | 81.5% | 91.0% |
| Example 4 | 15/15 | 80.5% | 90.1% |
| Example 5 | 15/15 | 81.6% | 90.9% |
| Example 6 | 15/15 | 81.9% | 91.0% |
| Example 7 | 15/15 | 80.8% | 90.6% |
| Example 8 | 15/15 | 80.5% | 90.4% |
| Example 9 | 15/15 | 80.3% | 90.1% |
| Example 10 | 15/15 | 80.0% | 89.1% |
| Example 11 | 15/15 | 80.7% | 90.5% |
| Example 12 | 14/15 | 80.9% | 90.3% |
| Example 13 | 15/15 | 80.2% | 90.2% |
| Example 14 | 15/15 | 79.5% | 90.1% |
| Example 15 | 15/15 | 83.5% | 91.5% |
| Comparative Example 1 | 0/15 | 72.3% | 87.3% |
| Comparative Example 2 | 15/15 | 75.5% | 88.5% |
| Comparative Example 3 | 15/15 | 78.9% | 86.8% |
| Comparative Example 4 | 3/15 | 80.2% | 91.5% |
| Comparative Example 5 | 15/15 | 78.4% | 86.2% |
| Comparative Example 6 | 15/15 | 77.2% | 87.7% |

From the comparison of the test results in the Table above, it could be seen that compared to Comparative Example 1, after the multifunctional coatings were introduced in Examples 1-15, the low-temperature discharge performance of the battery cells was significantly increased by about 8%, and the capacity retention rate after 800 cycles at room temperature also increased by about 2% (such numerical values were deemed to be a significant improvement in the field of lithium batteries). Compared to samples with R₁*R₂*d < 2, the safety performance of the Examples had also been significantly improved, with the passing rate of the nail penetration test increasing from 20% to > 90%; and compared to the sample with R₁*R₂*d > 45, the capacity retention rate of the Examples after 800 cycles at room temperature was > 89%. Specifically, when R₁*R₂*d was within the preferred range, i.e. 15 ≤ R₁*R₂*d ≤ 35, the performance of the sample was more excellent, the nail penetration test passing rate could reach 100%, and the capacity retention rate after 800 cycles at room temperature was > 90%.

In addition, it was also found from Comparative Example 2 that when (10c³ - 21c² + 14c + 0.08)/(lg 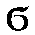 )² < 0.1, the improvement in low-temperature discharge performance of the battery cell became insignificant. Example 4 showed that when the ionic conductivity of the solid electrolyte decreased, in order to achieve the same effect, it was necessary to significantly increase its usage amount (from 15% in Example 1 to 30%). From Examples 5-6 and Examples 14-15, it could be seen that when the usage amount of the solid electrolyte reached a certain level and it was increased continuously, the improvement in low-temperature performance of the battery cell became no longer significant. When 0.12 ≤ (10c³ - 21c² + 14c + 0.08)/(lg 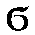 )² ≤ 0.22, the usage amount of the solid electrolyte was less and the improvement in low-temperature discharge performance was significant, resulting in better comprehensive incomes.

In summary, it could be concluded that, by introducing the solid electrolyte into the multifunctional coating, and by limiting the double-sided separator resistance R₁ and thickness d of the multifunctional coating, the double-sided separator resistance R₂ of the positive electrode sheet, and the relationship among the parameters, meanwhile by limiting the relationship between the content c of the solid electrolyte in the multifunctional coating and the ionic conductivity 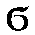 at room temperature, thereby reducing the internal resistance of the battery, not only the safety performance of the coating was maintained, but also the solid electrolyte had excellent ionic conductivity at a low temperature, which took into account both the low-temperature discharge performance and the cycle performance of the battery. The battery cells provided in the present disclosure could achieve a nail penetration passing rate of greater than 90%, a discharge capacity at -10°C of no less than 79% @ 3.4 V, and at the same time a capacity retention rate after 800 cycles at 25°C of no less than 89% when satisfying 2 ≤ R₁*R₂*d ≤ 45 and 0.1 ≤ (10c³ - 21c² + 14c + 0.08)/(lg 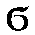 )² ≤ 0.45.

The above description is only partial or preferred embodiments of the present disclosure, and neither the text nor the drawings can thus limit the claimed scope of the present disclosure. Any equivalent structural transformation made using the contents of specification and drawings of the present disclosure, or directly/indirectly applied in other related technical fields, under the overall conception of the present disclosure, is included in the claimed scope of the present disclosure.

## Claims

1. A positive electrode sheet, **characterized by** comprising:
a current collector;
a multifunctional coating disposed on a surface of at least one side of the current collector; and
a positive electrode active material layer disposed on a surface of the multifunctional coating;
wherein the multifunctional coating comprises a solid electrolyte, a first conductive agent and a first binder, a resistance and a total thickness of the multifunctional coating, and a resistance of the positive electrode sheet satisfy a relational formula: 2 ≤ R₁*R₂*d ≤ 45, wherein R₁ is the resistance of the multifunctional coating, R₂ is the resistance of the positive electrode sheet, and d is the total thickness of the multifunctional coating; and
a mass ratio c of the solid electrolyte to the multifunctional coating and an ionic conductivity 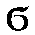 of the solid electrolyte at room temperature satisfy a relational formula: 0.1 ≤ (10c³ - 21c² + 14c + 0.08)/(lg 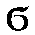 )² ≤ 0.45.

2. The positive electrode sheet of claim 1, wherein the resistance and the total thickness of the multifunctional coating, and the resistance of the positive electrode sheet satisfy a relational formula: 15 ≤ R₁*R₂*d ≤ 35.

3. The positive electrode sheet of claim 1, wherein the mass ratio c of the solid electrolyte to the multifunctional coating and the ionic conductivity 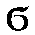 of the solid electrolyte at room temperature satisfy a relational formula: 0.12 ≤ (10c³ - 21c² + 14c + 0.08)/(lg 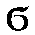 )² ≤ 0.22.

4. The positive electrode sheet of any one of claims 1 to 3, wherein the total thickness d of the multifunctional coating is 1 µm to 20 µm;
and/or, under a test pressure of 0.4 tons, the resistance R₁ of the multifunctional coating is 0.5 Ω to 5 Ω.

5. The positive electrode sheet of claim 4, wherein a mass ratio of the solid electrolyte, the first conductive agent, and the first binder in the multifunctional coating is (1 to 95): (0.5 to 5): (0.5 to 10);
and/or, the total thickness d of the multifunctional coating is 7.5 µm to 10.3 µm.

6. The positive electrode sheet of claim 5, wherein the first conductive agent is selected from one or two of conductive carbon black and carbon nanotubes; and/or, the first binder is selected from at least one of polyvinylidene fluoride, styrene butadiene rubber, sodium carboxymethyl cellulose, and polyacrylate.

7. The positive electrode sheet of claim 1, wherein the multifunctional coating further comprises at least one of a thermally stable active material and an inert inorganic filler;
and/or, a mass ratio of the solid electrolyte, the first conductive agent, the first binder, the thermally stable active material, and the inert inorganic filler in the multifunctional coating is (1 to 95): (0.5 to 5): (0.5 to 10): (1 to 95): (1 to 95).

8. The positive electrode sheet of claim 7, wherein a double-sided coating surface density of the multifunctional coating is 2 mg/1540.25 mm² to 35 mg/1540.25 mm²;
and/or, the thermally stable active material is selected from one or two of lithium iron phosphate and lithium iron manganese phosphate; and the inert inorganic filler is selected from one or two of alumina and boehmite.

9. The positive electrode sheet of claim 1, wherein the solid electrolyte is selected from at least one of Li₁₊ₓAlₓM₂₋ₓ(PO₄)₃, Li₇La₃N₂O₁₂, Li_{3y}La_{2/3-y}TiO₃, Li_{7-z}La₃Zr_{2-z}Ta_{z}O₁₂ and Li_{2 +a-b}ZrCl_{6-a-b}Oₐ, wherein 0 < x < 0.5, M is selected from at least one of Ti and/or Ge; N is selected from at least one of Zr, Sn, and Ta; and 0 < y < 0.16, 0 < z < 2, 0 ≤ a ≤ 2, 0 ≤ b ≤ 0.75; and/or, a particle size of the solid electrolyte is 0.2 µm to 1.5 µm.

10. A secondary battery **characterized by** comprising a positive electrode sheet, a negative electrode sheet and a separator interposed between the positive electrode sheet and the negative electrode sheet, wherein the positive electrode sheet is the positive electrode sheet of any one of claims 1 to 9.
